Europäisches Patentamt

European Patent Office

Office européen des brevets

Numéro de publication: **0 367 697**

**A1**

# DEMANDE DE BREVET EUROPEEN

Numéro de dépôt: **89440117.3**

Date de dépôt: **26.10.89**

Int. Cl.⁵: **B60R 22/04**

Priorité: **26.10.88 FR 8814237**

Date de publication de la demande:
**09.05.90 Bulletin 90/19**

Etats contractants désignés:
**DE ES GB IT SE**

Demandeur: **ECIA- EQUIPEMENTS ET COMPOSANTS POUR L'INDUSTRIE AUTOMOBILE S.A.**
**Pont-de-Gland**
**F-25402 Audincourt Cédex(FR)**

Inventeur: **Marquaire, Pierre**
**Saint Rémy**
**88480 Etival(FR)**

Mandataire: **Nuss, Pierre et al**
**10, rue Jacques Kablé**
**F-67000 Strasbourg(FR)**

## Ceinture de sécurité pour véhicule automobile.

La présente invention concerne une ceinture de sécurité (1), dont une extrémité est fixée à la partie inférieure du montant de portière (2) et dont l'autre extrémité est montée sur un enrouleur (3) fixé dans ou sur ledit montant de portière (2), ladite ceinture (1) étant guidée, près de la partie supérieure du montant de portière (2), dans une anse (4), caractérisée en ce qu'elle est munie, en outre, d'un élément (5) mobile en translation, fixé à une extrémité d'un bras (6), dont l'autre extrémité est montée à pivotement sur un élément de carrosserie (7), ledit bras (6) coopérant, en position de service de la ceinture (1), avec un moyen de blocage (8).

## Ceinture de sécurité pour véhicule automobile

La présente invention concerne le domaine de l'industrie automobile, en particulier des accessoires de sécurité, et a pour objet une ceinture de sécurité pour véhicule automobile.

Actuellement, les ceintures de sécurité sont généralement agencées le long des montants de portières avec un ancrage fixe dans la partie inférieure du montant et une fixation sur un dispositif enrouleur logé dans le montant, la partie correspondante de ceinture étant guidée dans un passage de la partie supérieure du montant ou dans un élément de forme correspondante fixé sur ladite partie supérieure dudit montant.

En position d'utilisation, un élément monté de manière mobile sur la ceinture coopère, du côté opposé du siège, avec un dispositif de verrouillage.

Ce mode de réalisation connu des ceintures de sécurité présente, cependant, l'inconvénient d'être contraignant dans l'utilisation de ces dernières, obligeant généralement le conducteur ou le passager à saisir l'élément mobile, monté sur la ceinture, derrière le plan du siège afin de passer la ceinture devant soi et de fixer ledit élément dans le dispositif de verrouillage. La gêne ainsi occasionnée au conducteur et au passager entraîne souvent une certaine négligence de ces derniers à faire usage de la ceinture.

La présente invention a pour but de pallier ces inconvénients.

Elle a, en effet, pour objet une ceinture de sécurité, dont une extrémité est fixée à la partie inférieure du montant de portière et dont l'autre extrémité est montée sur un enrouleur fixé dans ou sur ledit montant de portière, ladite ceinture étant guidée, près de la partie supérieure du montant de portière, dans une anse, caractérisée en ce qu'elle est munie, en outre, d'un élément mobile en translation, fixé à une extrémité d'un bras, dont l'autre extrémité est montée à pivotement sur un élément de carrosserie, ledit bras coopérant, en position de service de la ceinture, avec un moyen de blocage.

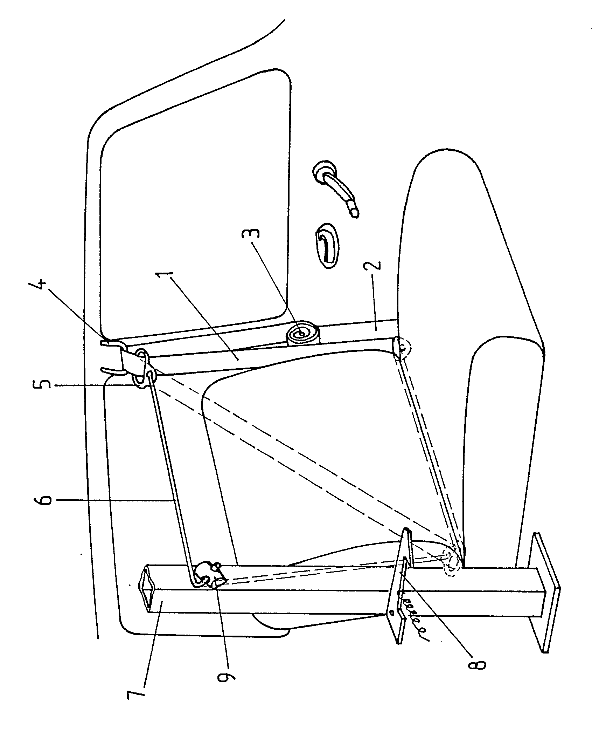

L'invention sera mieux comprise grâce à la description ci-après, qui se rapporte à un mode de réalisation préféré, donné à titre d'exemple non limitatif, et expliqué avec référence au dessin schématique annexé, dont la figure unique est une vue partielle en perspective d'un habitacle de véhicule automobile muni d'une ceinture conforme à l'invention.

Le dessin annexé représente une ceinture de sécurité 1, dont une extrémité est fixée à la partie inférieure du montant de portière 2 et dont l'autre extrémité est montée sur un enrouleur 3 fixé dans ou sur ledit montant de portière 2. La ceinture 1 est guidée, en outre, près de la partie supérieure du montant de portière 2, dans une anse 4.

Conformément à l'invention, la .ceinture 1 est munie, par ailleurs, d'un élément 5 mobile en translation, fixé à une extrémité d'un bras 6, dont l'autre extrémité est montée à pivotement sur un élément de carosserie 7. Le bras 6 coopère, en position de service de la ceinture 1, avec un moyen de blocage 8.

L'élément de carrosserie 7 peut être constitué, soit par le toit du véhicule, soit par un poteau central monté entre ledit toit du véhicule et son plancher, le palier de pivotement 9 du bras 6 étant fixé sur ledit toit ou ledit poteau.

Le moyen 8 de blocage du bras 6 en position de service de la ceinture 1 peut être, sous forme d'un loquet ou d'une pince élastique, fixé sur la partie inférieure de l'élément de carrosserie 7 ou sur un moyen de support solidaire du plancher du véhicule.

En position de non-utilisation de la ceinture 1, celle-ci est enroulée sur l'enrouleur 3 et l'élément 5 est tiré en direction du montant de portière 2, entraînant le bras 6 dans un pivotement à partir de la position de service de la ceinture 1, dans laquelle il est pratiquement à la verticale, à une position sensiblement horizontale.

Cette position de non-utilisation de la ceinture correspond sensiblement à une hauteur du bras 6, à l'horizontale, supérieure à la position de la tête des occupants du véhicule.

Dans le cas d'utilisation d'un élément de carosserie 7 en forme de poteau central, ce dernier participera, en outre, au renforcement de la rigidité de la carrosserie.

Selon une variante de réalisation de l'invention, non représentée au dessin annexé, le palier 9 de pivotement du bras 6 est avantageusement pourvu d'un moteur effectuant la mise en place automatique de la ceinture 1, dont la commande est réalisée par actionnement d'une manette par l'usager ou automatiquement au moyen d'un contacteur déclenché par la fermeture de la portière ou par la commande de démarrage du moteur du véhicule ou par un palpeur de présence de l'usager disposé dans la masse du siège. Le moteur peut être, de manière connue, un moteur électrique, pneumatique ou hydraulique, dont l'arbre de sortie constitue l'axe du bras pivotant 6.

Conformément à une autre caractéristique de l'invention, non représentée au dessin annexé, le bras pivotant 6 est avantageusement sous forme d'un bras téléscopique, dont la longueur est réglée par un servomoteur de type électrique, hydraulique ou autre, programmé en fonction de la trajectoire accomplie par le bras 6.

Selon une autre variante de réalisation de l'invention, non représentée au dessin annexé, l'élément 5 mobile en translation sur la ceinture 1, peut être réalisé sous forme d'un chariot guidé dans un rail s'étendant, d'une part, entre l'anse 4 de guidage de la ceinture et l'élément de carrosserie 7 en forme de poteau et, d'autre part, dans ou sur ledit élément de carrosserie 7 en forme de poteau.

Dans un tel mode de réalisation, le chariot peut avantageusement être entraîné, soit directement par un moteur électrique embarqué, dont l'alimentation est réalisée par l'intermédiaire du rail de guidage, soit au moyen d'un moteur fixe agissant sur le chariot par l'intermédiaire d'un câble ou d'une chaîne guidée dans le rail.

Grâce à l'invention, il est possible de réaliser une ceinture de sécurité facile à utiliser et incitant l'utilisateur à en faire usage. En outre, dans sa forme motorisée, une telle ceinture peut même se mettre automatiquement en place dès que l'usager s'installe dans le véhicule.

Bien entendu, l'invention n'est pas limitée au mode de réalisation décrit et représenté au dessin annexé. Des modifications restent possibles, notamment du point de vue de la constitution des divers éléments ou par substitution d'équivalents techniques, sans sortir pour autant du domaine de protection de l'invention.

## Revendications

1. Ceinture de sécurité (1), dont une extrémité est fixée à la partie inférieure du montant de portière (2) et dont l'autre extrémité est montée sur un enrouleur (3) fixé dans ou sur ledit montant de portière (2), ladite ceinture (1) étant guidée, près de la partie supérieure du montant de portière (2), dans une anse (4), caractérisée en ce qu'elle est munie, en outre, d'un élément (5) mobile en translation, fixé à une extrémité d'un bras (6), dont l'autre extrémité est montée à pivotement sur un élément de carrosserie (7), ledit bras (6) coopérant, en position de service de la ceinture (1), avec un moyen de blocage (8).

2. Ceinture, suivant la revendication 1, caractérisée en ce que l'élément de carrosserie (7) est constitué, soit par le toit du véhicule, soit par un poteau central monté entre ledit toit du véhicule et son plancher, le palier de pivotement (9) du bras (6) étant fixé sur ledit toit ou ledit poteau.

3. Ceinture, suivant l'une quelconque des revendications 1 et 2, caractérisée en ce que le moyen (8) de blocage du bras (6) en position de service de la ceinture (1) peut être, sous forme d'un loquet ou d'une pince élastique, fixé sur la partie inférieure de l'élément de carrosserie (7) ou sur un moyen de support solidaire du plancher du véhicule.

4. Ceinture, suivant l'une quelconque des revendications 1 et 2, caractérisée en ce que le palier (9) de pivotement du bras (6) est avantageusement pourvu d'un moteur effectuant la mise en place automatique de la ceinture (1), dont la commande est réalisée par actionnement d'une manette par l'usager ou automatiquement au moyen d'un contacteur déclenché par la fermeture de la portière ou par la commande de démarrage du moteur du véhicule ou par un palpeur de présence de l'usager disposé dans la masse du siège.

5. Ceinture, suivant l'une quelconque des revendications 1 et 4, caractérisée en ce que le bras pivotant (6) est avantageusement sous forme d'un bras télescopique, dont la longueur est réglée par un servomoteur de type électrique, hydraulique ou autre, programmé en fonction de la trajectoire accomplie par le bras (6).

6. Ceinture, suivant la revendication 1, caractérisée en ce que l'élément (5) mobile en translation sur la ceinture (1), est réalisé sous forme d'un chariot guidé dans un rail s'étendant, d'une part, entre l'anse (4) de guidage de la ceinture et l'élément de carrosserie (7) en forme de poteau et, d'autre part, dans ou sur ledit élément de carrosserie (7) en forme de poteau.

7. Ceinture, suivant la revendication 6, caractérisée en ce que le chariot est avantageusement entraîné, soit directement par un moteur électrique embarqué, dont l'alimentation est réalisée par l'intermédiaire du rail de guidage, soit au moyen d'un moteur fixe agissant sur le chariot par l'intermédiaire d'un câble ou d'une chaîne guidée dans le rail.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | FR-A-2 242 867 (B.M.W.) <br> * En entier * | 1-4 | B 60 R 22/04 |
| Y | | 5 | |
| | --- | | |
| Y | FR-A-2 151 297 (RECARO) <br> * Figure 4; page 11, ligne 36 - page 12, ligne 30 * | 5 | |
| | --- | | |
| A | PATENT ABSTRACTS OF JAPAN, vol. 11, no. 140 (M-586)[2587], 8 mai 1987; & JP-A-61 278 451 (SUZUKI) <br> * Abrégé; figures 1,2 * | 1,4,6,7 | |
| | --- | | |
| A | US-A-4 185 855 (SALAMON) <br> * En entier * | 1,6,7 | |
| | --- | | |
| A | FR-A-2 177 362 (NISSAN) <br> * Figures 1-6; page 4, ligne 12 - page 7, ligne 5 * | 1,6,7 | |
| | --- | | |
| A | US-A-4 747 636 (HARASAKI) <br> * Figures 1,8,9; colonne 7, ligne 16 - colonne 8, ligne 10 * | 1,6,7 | **DOMAINES TECHNIQUES RECHERCHES (Int. Cl.5)** <br><br> B 60 R |
| | --- | | |
| A | FR-A-2 109 167 (LINDEROTH) <br> * En entier * | 1,3,4 | |
| | ----- | | |

Le présent rapport a été établi pour toutes les revendications

| Lieu de la recherche | Date d'achèvement de la recherche | Examinateur |
|---|---|---|
| LA HAYE | 31-01-1990 | DUBOIS B.F.J. |